# EUROPÄISCHE PATENTSCHRIFT

(11) **EP 0 704 868 B1**
(45) Veröffentlichungstag und Bekanntmachung des Hinweises auf die Patenterteilung: **18.03.1998**
(21) Anmeldenummer: 95115096.0
(22) Anmeldetag: 25.09.1995
(51) Int. Cl.: H01G 2/14, H01G 4/228

(54) **Elektrischer Kondensator**
Electrical capacitor
Condensateur électrique

(30) Priorität: 26.09.1994 DE 4434357
(43) Veröffentlichungstag der Anmeldung: 03.04.1996
(73) Patentinhaber: SIEMENS MATSUSHITA COMPONENTS GmbH & CO KG, 81617 München (DE)
(72) Erfinder: Erhardt, Werner, Dipl.-Ing., D-89177 Ballendorf (DE); Gösmann, Hubertus, Dipl.-Ing., D-89561 Dischingen (DE); Wiedemann, Rolf, D-89564 Nattheim (DE)
(74) Vertreter: Fuchs, Franz-Josef, Dr.-Ing.

(56) Entgegenhaltungen:
- EP-A- 0 008 698
- EP-A- 0 317 989

## Beschreibung

Die Erfindung betrifft einen elektrischen Kondensator, insbesondere Leistungskondensator, der einen Wickel aus Dielektrikumsfolien aus Papier und/oder Kunststoff und metallische Beläge enthält, und bei dem wenigstens ein Wickel in einem Stromzuführungen enthaltenden, gasdicht verschlossenen, mit einem, als Abreißsicherung ausgebildeten, Überdrucksicherungssystem versehenen Metallbecher untergebracht ist, der mit einer dielektrischen Imprägnierflüssigkeit gefüllt ist, bei dem zusätzlich ein, vorzugsweise, elektronegatives Gas in einer Menge enthalten ist, die einen Überdruck gewährleistet, der höher als der Normaldruck, jedoch niedriger als der Ansprechdruck für das Sicherungssystem ist, bei dem das Gas durch eine nach der Beladung verschließbare Öffnung eingefüllt ist und bei dem die Stromzuführungen mit äußeren Anschlüssen kontaktiert sind, die isolierend im Deckel des Gehäuses angeordnet sind.

Ein derartiger Kondensator ist aus der DE-2838831-C2 bekannt. Die Beladung mit dem elektronegativen Gas verhindert Koronaentladungen im Kondensatorwickel sowie zwischen Belag und Gehäuse bei Druck- bzw. Temperaturänderungen und hohen Spannungen weitestgegend. Dies ist insbesondere bei hochbelasteten Kondensatoren (z.B. GTO-Kondensatoren) erforderlich. Verfahrenstechnisch bedeutet das, daß die Kondensatorgehäuse unter Überdruck gasdicht verschlossen werden müssen. Dazu besitzt der bekannte Kondensator eine zusätzliche spezielle Imprägnieröffnung, welche es ermöglicht, den Innendruck durch Gaszufuhr, z.B. mit Luft, SF₆- oder N₂-Gas usw., zu erhöhen. Anschließend wird dann - unter Vorhaltung des Drucks - die Öffnung verschlossen (z.B. durch Verschraubung oder Vernietung, gegebenenfalls auch mit zusätzlicher Überlötung, Verschweißung oder Verklebung).

Zusätzliche Öffnungen in Kondensatorgehäusen sind jedoch im allgemeinen nicht erwünscht, da dies meist einen erhöhten Fertigungsaufwand bedeutet.

Aufgabe der vorliegenden Erfindung ist es, den eingangs angegebenen Kondensator derart weiterzubilden, daß eine zusätzliche Imprägnieröffnung nicht erforderlich ist.

Diese Aufgabe wird erfindungsgemäß dadurch gelöst, daß die Abreißsicherung als Rohrquerschnitt ausgelegt ist, daß die Abreißsicherung einen integrierten Beladungskanal besitzt, daß die Beladungsöffnung für die Gasfüllung in die Abreißsicherung integriert ist, und daß die Abreißsicherung durch eine Durchführung nach außen geführt und dort mit einem der äußeren Anschlüsse (6) verbunden ist.

Vorteilhafterweise ist die Abreißsicherung als Rohrsicherung ausgebildet, die eine zusätzliche Öffnung aufweist.

Die Erfindung wird im folgenden anhand von Ausführungsbeispielen erläutert.

In der dazugehörenden Zeichnung zeigen:
Fig.1 einen Kondensator in Seitenansicht und
Fig.2 einen vergrößerten Ausschnitt aus Fig.1.

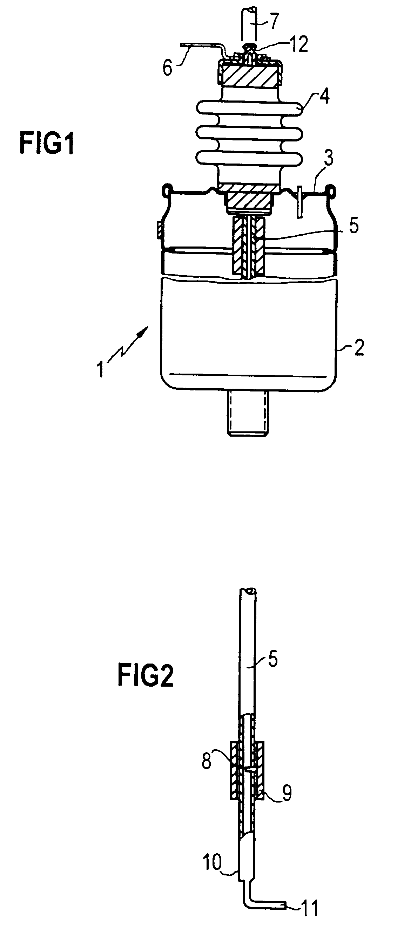

In Fig.1 ist in Teilansicht ein Kondensator 1 dargestellt, der in ein metallisches Gehäuse 2 eingebaut ist, das durch einen Deckel 3 verschlossen ist. Im Deckel 3 ist zumindest eine Durchführung 4 angeordnet durch die eine mit der einen Kondensatorelektrode verbundene Abreißsicherung 5 nach außen geführt und dort mit einem äußeren Anschluß 6 verbunden ist.

In Fig.2 ist die Abreißsicherung 5 vergrößert dargstellt. Die Abreißsicherung 5 ist als Rohrsicherung ausgebildet und ragt ursprünglich mit ihrem Ende 7 über die Durchführung 4 heraus. Die Abreißsicherung 5 besitzt eine Sollbruchstelle 8, die durch einen Knickschutz 9 gesichert ist. Ferner kann die Abreißsicherung 5 eine zusätzliche Öffnung 10 besitzen, die beispielsweise als Bohrung oder Schlitz ausgebildet ist. Das Ende 11 der Abreißsicherung 5 ist umgebogen und gegebenfalls flachgedrückt und dient der Verankerung beispielsweise im Boden des Gehäuses 2. Das andere Ende 7 der Abreißsicherung 5 ist in der Durchführung 4 befestigt, so daß bei einem Druckanstieg im Kondensator-Gehäuse 2 der Deckel 3 aufgewölbt wird und die Abreißsicherung 5 an der Sollbruchstelle 8 reißt, so daß der Kondensator freigeschaltet wird.

Durch die Verwendung einer Abreißsicherung mit integriertem Beladungskanal erhält man eine kostengünstige und auch unter beengten räumlichen Verhältnissen einsetzbare Lösung. Das Wesentliche am Gegenstand der Erfindung ist, daß die elektrische Anschlußleitung nicht wie üblich als Vollmaterial oder Litze sondern als Rohrquerschnitt ausgelegt ist. Es ist somit zum Beladen des Kondensators mit einem Gas keine zusätzliche Kondensatoröffnung erforderlich, da eine einfache Belademöglichkeit über das Rohr der Abreißsicherung erfolgt.

Nach erfolgter Beladung wird das Rohr der Abreißsicherung 5 an der Stelle 12 abgequetscht und das überstehende Rohr abgeschnitten. Möglich ist es auch, an der Stelle 12 eine zusätzliche Verlötung, Verschweißung oder Verklebung zur besseren Abdichtung vorzunehmen.

## Patentansprüche

1. Elektrischer Kondensator (1), insbesondere Leistungskondensator, der einen Wickel aus Dielektrikumsfolien aus Papier und/oder Kunststoff und metallische Beläge enthält, und bei dem wenigstens ein Wickel in einem Stromzuführungen enthaltenden, gasdicht verschlossenen, mit einem, als Abreißsicherung (5) ausgebildeten, Überdrucksicherungssystem versehenen Metallbecher (2) untergebracht ist, der mit einer dielektrischen Imprägnierflüssigkeit gefüllt ist, bei dem zusätzlich ein, vorzugsweise, elektronegatives Gas in einer Menge enthalten ist, die einen Überdruck gewährleistet, der höher als der Normaldruck, jedoch niedriger als der Ansprechdruck für das Sicherungssystem ist, bei dem das Gas durch eine nach der Beladung verschließbare Öffnung eingefüllt ist und bei dem die Stromzuführungen mit äußeren Anschlüssen (6) kontaktiert sind, die isolierend im Deckel (3) des Gehäuses (2) angeordnet sind,
**dadurch gekennzeichnet**,
daß die Abreißsicherung (5) als Rohrquerschnitt ausgelegt ist, daß die Abreißsicherung (5) einen integrierten Beladungskanal besitzt, daß die Beladungsöffnung für die Gasfüllung in die Abreißsicherung (5) integriert ist, und daß die Abreißsicherung (5) durch eine Durchführung (4) nach außen geführt und dort mit einem der äußeren Anschlüsse (6) verbunden ist.

2. Elektrischer Kondensator nach Anspruch 1,
**dadurch gekennzeichnet**,
daß die Abreißsicherung (5) als Rohrsicherung ausgebildet ist, die eine zusätzliche Öffnung (10) aufweist.

## Claims

1. Electric capacitor (1), in particular a power capacitor, which contains an element made from dielectric films of paper and/or plastic, and metallic foils, and in which at least one element is accommodated in a metal cup (2), which contains supply leads, is sealed in a gastight fashion, is provided with an overpressure safety system, constructed as an internal overpressure disconnecter (5), and which is filled with a dielectric impregnating liquid, in which, in addition, a gas, preferably an electron-negative one, is contained in a quantity which ensures an overpressure which is higher than the normal pressure, but lower than the response pressure for the safety system, in which the gas is filled through an opening which can be sealed after the charging, and in which the supply leads make contact with external terminals (6) which are arranged in a fashion insulating them in the cover (3) of the container (2), characterized in that the internal overpressure disconnecter (5) is designed as a tubular cross-section, in that the internal overpressure disconnecter (5) has an integrated charging channel, in that the charging opening for filling with gas is integrated into the internal overpressure disconnecter (5), and in that the internal overpressure disconnecter (5) is led outwards through a bushing (4) and connected there to one of the external terminals (6).

2. Electric capacitor according to Claim 1, characterized in that the internal overpressure disconnecter (5) is constructed as a tube fuse which has an additional opening (10).

## Revendications

1. Condensateur électrique (1), en particulier condensateur de puissance, qui contient un enroulement en feuilles diélectriques de papier et/ou de matière plastique et des revêtements métalliques, et sur lequel un enroulement est logé dans un boîtier métallique (2) contenant des alimentations en courant, fermé de manière étanche aux gaz, équipé d'un système de protection contre les surpressions réalisé sous forme de coupe-circuit à rupture, boîtier qui est rempli d'un liquide d'imprégnation diélectrique qui contient en outre un gaz de préférence électronégatif, en une quantité qui assure une surpression qui est supérieure à la pression normale, mais inférieure à la pression de réponse du système de protection, dans lequel le gaz est alimenté par une ouverture verrouillable après le chargement et dans lequel un contact est établi entre les alimentations en courant et des connexions extérieures (6) qui sont placées de manière isolante dans le couvercle (3) du boîtier (2).
**caractérisé en ce que**
le coupe-circuit à rupture (5) est conçu comme un coupe-circuit tubulaire, le coupe-circuit à rupture (5) dispose d'un canal de chargement intégré, l'ouverture de chargement pour l'alimentation en gaz est intégrée dans le coupe-circuit à rupture (5), et l'on fait passer le coupe-circuit à rupture (5) vers l'extérieur par un passage (4), où il est relié à l'une des connexions extérieures (6).

2. Condensateur électrique selon la revendication 1,
**caractérisé en ce que**
le coupe-circuit à rupture (5) est conçu comme un coupe-circuit tubulaire qui dispose d'une ouverture supplémentaire (10).
